(19) Europäisches Patentamt / European Patent Office / Office européen des brevets

(11) **EP 4 361 004 A1**

(12) **EUROPEAN PATENT APPLICATION**
published in accordance with Art. 153(4) EPC

(43) Date of publication:
**01.05.2024 Bulletin 2024/18**

(21) Application number: **22864488.6**

(22) Date of filing: **29.08.2022**

(51) International Patent Classification (IPC):
**B62D 29/04** (2006.01)   **B32B 27/00** (2006.01)

(52) Cooperative Patent Classification (CPC):
**B62D 29/005; B32B 27/00; B60J 5/0484;**
**B62D 29/04;** B62D 25/06; B62D 25/10

(86) International application number:
**PCT/JP2022/032381**

(87) International publication number:
**WO 2023/032906 (09.03.2023 Gazette 2023/10)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **03.09.2021 JP 2021143779**

(71) Applicant: NIPPON STEEL CORPORATION
Chiyoda-ku
Tokyo 100-8071 (JP)

(72) Inventors:
• YAKUSHIJIN, Yutaka
Tokyo 100-8071 (JP)
• NISHIMURA, Ryuichi
Tokyo 100-8071 (JP)
• SAWA, Yasunori
Tokyo 100-8071 (JP)

(74) Representative: **Vossius & Partner**
**Patentanwälte Rechtsanwälte mbB**
**Siebertstrasse 3**
**81675 München (DE)**

(54) **PANEL STRUCTURE FOR AUTOMOBILE, AND MANUFACTURING METHOD OF PANEL STRUCTURE FOR AUTOMOBILE**

(57)    This panel structure for an automobile (10) includes: an outer panel member (1) having a sheet shape; a resin member (2) that is disposed on an inner surface of the outer panel member (1); and an adhesive portion (3) that bonds the outer panel member (1) and the resin member (2), in which the outer panel member (1) includes a base metal (12) and a coating film (14) provided on the base metal (12), the base metal (12) has a sheet thickness of 0.3 mm to 0.5 mm, the resin member (2) has a bending rigidity of $0.3 \times 10^6$ N·mm$^2$ or more, and the adhesive portion (3) contains a cured material of a room-temperature curing adhesive.

*FIG. 1*

EP 4 361 004 A1

**Description**

[Technical Field of the Invention]

The present disclosure relates to a panel structure for an automobile and a manufacturing method of a panel structure for an automobile.

The present application claims priority based on Japanese Patent Application No. 2021-143779 filed in Japan on September 3, 2021, the contents of which are incorporated herein by reference.

[Related Art]

Currently, a technique for reducing the weight of an automobile is demanded. It is considered that when an outer panel such as a roof, a hood, or a door constituting an automobile can be high-strengthened, sufficient strength can be maintained even when the outer panel is thinned. Therefore, in order to reduce the weight of an automobile, a technique for high strengthening of an outer panel has been developed.

However, when the outer panel is thinned, the problem of insufficient panel stiffness becomes apparent. The panel stiffness is a characteristic indicating the resistance to deflection of the outer panel. For example, when a hand is placed on an outer panel of an automobile, the outer panel is less likely to deflect if the panel stiffness of the outer panel is high.

As a measure against insufficient panel stiffness, for example, Patent Document 1 describes a technique related to a reinforcement structure of an automobile vehicle body, the reinforcement structure including an inner sheet on an outer sheet with a foam layer interposed therebetween, the foam layer being a thermosetting resin foam having a foaming ratio of 1.03 to 1.30 times.

[Citation List]

[Patent Document]

[Patent Document 1]
Japanese Unexamined Patent Application, First Publication No. S63-258274

[Summary of Invention]

[Problems to be Solved by the Invention]

In the method of Patent Document 1, the foam layer and the outer sheet are bonded by heating at high temperature. When the sheet thickness of the outer sheet is 0.6 mm or more, since the outer sheet is thick, surface strain due to a difference in linear expansion coefficient between members is less likely to occur at the time of bonding. However, when the outer sheet (outer panel member) is thinned (for example, a sheet thickness of 0.3 mm to 0.5 mm) in order to reduce weight, surface strain may occur in the outer sheet due to a difference in linear expansion coefficient between members at the time of bonding, and the external appearance may be deteriorated.

The present invention has been made in view of the above circumstances, and an object is to provide a panel structure for an automobile that is lightweight, excellent in panel stiffness, and excellent in external appearance, and a manufacturing method of a panel structure for an automobile.

[Means for Solving the Problem]

In order to solve the above problem, the present invention proposes the means described below.

(1) A panel structure for an automobile, according to an aspect of the present invention includes:

an outer panel member having a sheet shape;
a resin member that is disposed on an inner surface of the outer panel member; and
an adhesive portion that bonds the outer panel member and the resin member, in which
the outer panel member includes a base metal and a coating film provided on the base metal,
the base metal has a sheet thickness of 0.3 mm to 0.5 mm,
the resin member has a bending rigidity of $0.3 \times 10^6$ N·mm² or more, and
the adhesive portion contains a cured material of a room-temperature curing adhesive.

(2) The panel structure for an automobile according to (1) above, in which a disposition area of the resin member disposed on the inner surface of the outer panel member may be 50 area% or more with respect to a total area of the inner surface of the outer panel member.

(3) The panel structure for an automobile according to (2) above, in which an area of the adhesive portion with respect to the disposition area of the resin member may be 5 area% or more.

(4) The panel structure for an automobile according to any one of (1) to (3) above may further include: an inner member that is disposed to face the inner surface of the outer panel member, in which at least a part of the inner member may be embedded in the resin member.

(5) The panel structure for an automobile according to (4) above, in which the inner member may extend along one direction in an in-plane direction of the outer panel member.

(6) The panel structure for an automobile according to any one of (1) to (5) above, in which the resin member may be a thermosetting resin.

(7) The panel structure for an automobile according to any one of (1) to (5) above, in which the resin member may be a thermoplastic resin.

(8) The panel structure for an automobile according to any one of (1) to (7) above, in which the room-temperature curing adhesive may be an acrylic adhesive.

(9) The panel structure for an automobile according to any one of (1) to (8) above, in which the outer panel member may have a tensile strength of 440 MPa or more.

(10) The panel structure for an automobile according to any one of (1) to (9) above, in which in the resin member, a thickness of a portion having a maximum size in a direction perpendicular to an in-plane direction of the outer panel member may be 3 mm or more and 60 mm or less.

(11) The panel structure for an automobile according to any one of (1) to (10) above, in which the resin member may not be coated.

(12) A manufacturing method of a panel structure for an automobile, according to an aspect of the present invention includes:

a coating step of coating a base metal of an outer panel member having a sheet shape;
an adhesive application step of applying a room-temperature curing adhesive to at least one of an inner surface of the outer panel member and a resin member after the coating step; and
a bonding step of bonding the inner surface of the outer panel member and the resin member after the adhesive application step.

(13) The manufacturing method of a panel structure for an automobile according to (12) above, in which a disposition area of the resin member disposed on the inner surface of the outer panel member may be 50 area% or more with respect to a total area of the inner surface of the outer panel member.

(14) The manufacturing method of a panel structure for an automobile according to (13) above, in which an application area of the room-temperature curing adhesive with respect to the disposition area of the resin member may be 5 area% or more.

(15) The manufacturing method of a panel structure for an automobile according to any one of (12) to (14) above, in which in the adhesive application step, the room-temperature curing adhesive may be applied to an entire surface of a disposition region of at least one of the inner surface of the outer panel member and the resin member.

(16) The manufacturing method of a panel structure for an automobile according to any one of (12) to (14) above, in which in the adhesive application step, the room-temperature curing adhesive may be linearly applied to a disposition region of at least one of the inner surface of the outer panel member and the resin member.

(17) The manufacturing method of a panel structure for an automobile according to any one of (12) to (14), in which in the adhesive application step, the room-temperature curing adhesive may be applied in a dot shape to a disposition region of at least one of the inner surface of the outer panel member and the resin member.

[Effects of the Invention]

According to the above aspect of the present invention, it is possible to provide a panel structure for an automobile that is lightweight, excellent in panel stiffness, and excellent in external appearance, and a manufacturing method of a panel structure for an automobile.

[Brief Description of the Drawing(s)]

FIG. 1 is a plan view of a panel structure for an automobile according to a first embodiment of the present invention.

FIG. 2 is an end surface view along line A-A of the panel structure for an automobile in FIG. 1.

FIG. 3 is a flowchart of a manufacturing method of a panel structure for an automobile according to the first embodiment of the present invention.

FIG. 4 is a view for describing an application position of a room-temperature curing adhesive.

FIG. 5 is a plan view of a panel structure for an automobile according to a second embodiment of the present invention.

FIG. 6 is an end surface view along line B-B of the panel structure for an automobile in FIG. 5.

FIG. 7 is an end surface view along line B1-B1 of the panel structure for an automobile in FIG. 5.

FIG. 8 is a plan view of a panel structure for an automobile according to a third embodiment of the present invention.

FIG. 9 is an end surface view along line C-C of the panel structure for an automobile in FIG. 8.

FIG. 10 is a flowchart of a manufacturing method of the panel structure for an automobile according to the third embodiment of the present invention.

FIG. 11 is a view for describing an application position of a room-temperature curing adhesive.

FIG. 12 is a plan view of a panel structure for an automobile according to a fourth embodiment of the present invention.

FIG. 13 is an end surface view along line D-D of the panel structure for an automobile in FIG. 12.

FIG. 14 is a flowchart of a manufacturing method of a panel structure for an automobile according to the fourth embodiment of the present invention.

FIG. 15 is a view for describing an application position of a room-temperature curing adhesive.

FIG. 16 is a plan view of a panel structure for an automobile according to a fifth embodiment of the present invention.

FIG. 17 is an end surface view along line E-E of the panel structure for an automobile in FIG. 16.

FIG. 18 is a flowchart of a manufacturing method of the panel structure for an automobile according to the fifth embodiment of the present invention.

FIG. 19 is a view for describing an application position of a room-temperature curing adhesive.

[Embodiment(s) of the Invention]

<First Embodiment>

Hereinafter, a panel structure for an automobile according to the first embodiment of the present invention will be described in detail with reference to the drawings. Note that, in the drawings used in the following description, in order to facilitate understanding of features, feature parts may be illustrated in an enlarged manner for convenience, and dimensional proportions and the like of the components are not necessarily the same as actual ones. In addition, materials, dimensions, and the like exemplified in the following description are merely examples, and the present invention is not limited thereto, and can be appropriately changed and implemented without changing the gist thereof. In the present specification, a numerical value range indicated by using "to" means a range including numerical values described before and after "to" as a lower limit value and an upper limit value.

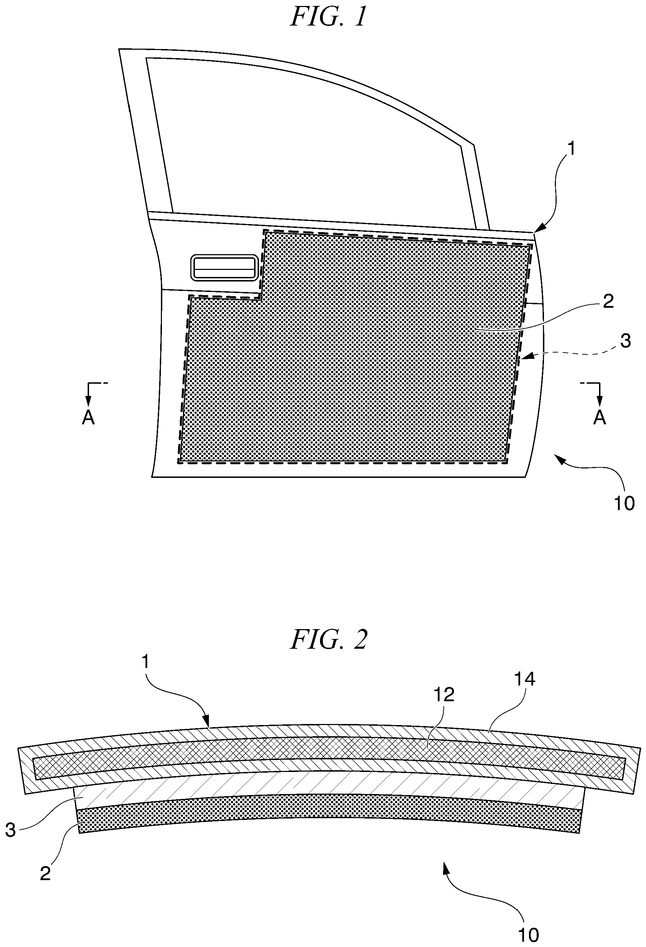

FIG. 1 is a plan view of a panel structure for an automobile according to the first embodiment of the present invention. In addition, FIG. 2 is an end surface view along line A-A of the panel structure for an automobile in FIG. 1. As illustrated in FIGS. 1 and 2, a panel structure for an automobile 10 according to the present embodiment includes an outer panel member 1 having a sheet shape, a resin member 2 disposed on an inner surface of the outer panel member 1, and an adhesive portion 3 that bonds the outer panel member 1 and the resin member 2. Hereinafter, each element of the panel structure for an automobile 10 will be described. The panel structure for an automobile 10 according to the present embodiment is a panel structure for an automobile applied to a side door.

(Outer Panel Member)

The outer panel member 1 is a sheet -shaped member having a curved surface protruding toward the outside of the vehicle. In the present disclosure, the surface on the outer side of the vehicle may be referred to as an outer surface, and the surface on the inner side of the vehicle may be referred to as an inner surface. The outer panel member 1 is formed by press forming a metal sheet such as a steel sheet.

The outer panel member 1 of the present disclosure is a member after coating. That is, the outer panel member 1 includes a base metal 12 and a coating film 14 provided on the base metal 12. In the present disclosure, the coating film 14 is provided on the outer surface and the inner surface of the base metal 12.

The tensile strength of the base metal 12 of the outer panel member 1 is preferably 440 MPa or more, and more preferably 590 MPa or more from the viewpoint of dent resistance. The tensile strength of the base metal 12 can be determined by preparing a No. 5 test piece described in JIS Z 2241:2011 from the base metal 12 and performing a test method described in JIS Z 2241:2011.

The coating film 14 is not particularly limited as long as it is formed using an automobile paint. For example, as the coating film 14, cationic epoxy resin, cationic acrylic resin, anionic acrylic resin, or the like can be used. The thickness of the coating film 14 is not particularly limited. The thickness of the coating film 14 is, for example, 20 μm to 100 μm on one side of the steel sheet.

The base metal 12 of the outer panel member 1 of the present disclosure has a sheet thickness of 0.3 mm to 0.5 mm. When the sheet thickness of the base metal 12 of the outer panel member 1 is 0.3 mm to 0.5 mm, the panel structure for an automobile 10 can be greatly reduced in weight. When the sheet thickness of the base metal 12 is less than 0.3 mm, sufficient panel stiffness cannot be obtained. When the sheet thickness of the base metal 12 exceeds 0.5 mm, the effect of weight reduction is reduced.

(Resin Member)

The bending rigidity of the resin member 2 of the present disclosure is $0.3 \times 10^6$ N·mm² or more. When the bending rigidity of the resin member 2 of the present disclosure is less than $0.3 \times 10^6$ N·mm², sufficient panel stiffness cannot be obtained. Even when the bending rigidity of the resin member 2 exceeds $2 \times 10^6$ N·mm², the effect is saturated, so that the bending rigidity of the resin member 2 is preferably $2 \times 10^6$ N·mm² or less. The average bending rigidity of the entire resin member 2 is preferably $0.3 \times 10^6$ N·mm² or more, but the bending rigidity may be less than $0.3 \times 10^6$ N·mm² in one or a plurality of parts of the resin member 2.

The bending rigidity of the resin member 2 can be measured, for example, by the method described below. For example, the test piece size, the radius of the bending indenter, and the inter-support distance are corrected based on JIS A1408:2017 so that the test piece of the resin member 2 cut out from the panel structure for an automobile 10 can be measured using Autograph AG-100KND manufactured by SHIMAZU CORPORATION, and a three-point bending test is performed to measure the maximum load and stroke of the bending indenter. Specifically, the test piece has a width of 100 mm and a length of 200 mm, an inter-support distance L is 180 mm, and the bending radius of the indenter is 50 mm. In addition, the stroke speed of the bending indenter is set to 5 mm/min. The average values of the two-time measurements are obtained. The bending rigidity in each measurement can be obtained by Formula (1).

$$\text{Bending rigidity} = \text{E (Young's modulus)} \times \text{I (second moment of area)} \dots (1)$$

$$\text{Young's modulus: } E = L^3/4bh^3 \times \Delta F/\Delta s \dots (2)$$

[E: Young's modulus (MPa), I: second moment of area (mm⁴), L: inter-support distance (mm), b: width of test piece (mm), h: test piece thickness (mm), ΔF: increase in load (N), Δs: increment in deformation (mm)]

In the resin member 2, the thickness of a portion (maximum thickness portion) having the maximum size in a direction perpendicular to the in-plane direction of the outer panel member 1 is preferably 3 mm or more and 60 mm or less.

It is preferable that the thickness of the maximum thickness portion of the resin member 2 be 3 mm or more because the insufficiency of rigidity due to the thinning of the outer panel member 1 can be compensated.

On the other hand, even when the thickness of the maximum thickness portion of the resin member 2 exceeds 60 mm, the effect is saturated, and thus the thickness is preferably 60 mm or less.

It is sufficient if the material of the resin member 2 is resin, and both thermosetting resin and thermoplastic resin can be used.

Examples of the thermosetting resin include epoxy resin, unsaturated polyester resin, and vinyl ester resin.

Examples of the thermoplastic resin include polyolefins (polyethylene, polypropylene, or the like) and acid-modified products thereof, polyamide resins such as nylon 6 and nylon 66, thermoplastic aromatic polyesters such as polyethylene terephthalate and polybutylene terephthalate, polycarbonate, polyethersulfone, polyphenylene ether and modified products thereof, polyarylate, polyetherketone, polyetheretherketone, polyetherketoneketone, vinyl chloride, styrene-based resins such as polystyrene, and phenoxy resins. Note that the resin may be formed of a plurality of types of resin materials. The amount of the thermoplastic resin in the resin member 2 is preferably 90 mass% or more with respect to the total mass of the resin member 2. The amount of the thermoplastic resin in the resin member 2 may be 100 mass%.

The resin member 2 may be foam resin obtained by foaming the resin described above. By using the foam resin, the weight of the panel structure for an automobile 10 can be reduced. When the resin member 2 is foam resin, the foaming ratio is preferably 5 times or more and 50 times or less. When the foaming ratio is 5 times or more and 50 times or less, weight reduction can be achieved while the bending rigidity of the resin member 2 is set to $0.3 \times 10^6$ N·mm² or more.

The specific gravity of the resin member 2 is preferably 0.1 or less for weight reduction. When the specific gravity of the resin member 2 is 0.1 or less and the bending rigidity of the resin member 2 is $0.3 \times 10^6$ N·mm² or more, the panel structure for an automobile 10 can be made lighter while maintaining the panel stiffness of the panel structure for an automobile 10. The specific gravity of the resin member 2 may be 0.03 or more.

The resin member 2 may not be coated. Normally, surface strain occurs in the outer sheet due to heat applied during coating after bonding, and the external appearance is deteriorated. Since the resin member 2 is bonded to the coated outer panel member 1, surface strain due to baking during electrodeposition coating after bonding does not occur. Thus, the panel structure for an automobile 10 is excellent in external appearance. The resin member 2 may be coated at room temperature (5 to 35°C).

A disposition area of the resin member 2 disposed on the inner surface of the outer panel member 1 is preferably 50 area% or more with respect to a total area of the inner surface of the outer panel member 1. A disposition area of the resin member 2 disposed on the inner surface of the outer panel member 1 is 50 area% or more with respect to the total area of the inner surface of the outer panel member 1, and the rigidity of the panel structure for an automobile 10 is improved. Here, the disposition area of the resin member 2 refers to an area of a part where the resin member 2 is disposed within the area of the outer panel member 1. The disposition area of the resin member 2 is more preferably 70 area% or more with respect to the total area of the inner surface of the outer panel member 1. The upper limit of the disposition area of the resin member 2 is not particularly limited, but is 100 area%. The disposition area of the resin member 2 is preferably 90 area% or less.

In the first embodiment, one resin member 2 covers 50 area% or more of the inner surface of the outer panel member 1. When electrodeposition coating is performed as in the conventional art, surface strain occurs, but in the present embodiment, since the resin member 2 is bonded to the outer panel member 1 after electrodeposition coating at room temperature, surface strain does not occur even when the entire surface is covered. Thus, more than half of the inner surface of the outer panel member 1 can be covered with the resin member 2. This makes it possible to greatly improve the panel stiffness of the panel structure for an automobile 10.

(Adhesive Portion 3)

The adhesive portion 3 of the present disclosure contains a cured material of a room-temperature curing adhesive. The room-temperature curing adhesive is an adhesive that cures at 10°C to 30°C. Whether or not it is cured can be determined by placing the adhesive at 10°C to 30°C for 24 hours and determining whether or not the bending elastic modulus is two times or more higher than that before being left (before curing). The bending elastic modulus can be measured (measurement temperature: 23°C) in accordance with, for example, JIS K 7171-1:2016. As a room-temperature curing type adhesive, an acrylic adhesive is preferable. Examples of the acrylic adhesive include second generation acrylic adhesive (SGA). An anaerobic adhesive, an instantaneous adhesive, and an elastomer-containing acrylic adhesive can be used as the room-temperature curing adhesive as long as the effects of the present invention are not impaired. The room-temperature curing adhesive refers to a state before curing. The adhesive portion 3 of the present disclosure contains a cured material obtained by curing the room-temperature curing adhesive. Since the outer panel member 1 and the resin member 2 after coating are bonded at room temperature, in-plane strain does not occur in the outer panel member 1. Thus, it is possible to obtain the panel structure for an automobile 10 excellent in external appearance.

The area of the adhesive portion 3 with respect to the disposition area of the resin member 2 is preferably 5 area% or more. When the area of the adhesive portion 3 with respect to the disposition area of the resin member 2 is 5 area% or more, the panel stiffness of the panel structure for an automobile 10 can be improved. The area of the adhesive portion with respect to the disposition area of the resin member 2 is more preferably 25 area% or more. In the present embodiment, since the disposition area of the resin member 2 is equal to the bonding area of the adhesive portion 3, the area of the adhesive portion 3 with respect to the disposition area of the resin member 2 is 100 area%.

(Bending Rigidity of Panel structure for an automobile 10)

In the panel structure for an automobile 10, weight reduction is achieved by thinning the outer panel member 1, and the resin member 2 that compensates for insufficient rigidity due to the thinning of the outer panel member 1 is bonded at room temperature, so that occurrence of in-plane strain in the outer panel member 1 is prevented. As described above, since the panel structure for an automobile 10 can achieve both weight reduction and securing rigidity, bending rigidity per unit weight is excellent. For example, when the thickness of the resin member 2 is 3 mm, the bending rigidity of the panel structure for an automobile 10 per 1 kg is preferably $0.57 \times 10^6$ N·mm$^2$ or more. When the thickness of the resin member 2 is 20 mm, the bending rigidity of the panel structure for an automobile 10 per 1 kg is preferably $1.47 \times 10^6$ N·mm$^2$ or more. When the thickness of the resin member 2 is 40 mm, the bending rigidity of the panel structure for an automobile 10 per 1 kg is preferably $1.46 \times 10^6$ N·mm$^2$ or more. When the thickness of the resin member 2 is 60 mm, the bending rigidity of the panel structure for an automobile 10 per 1 kg is preferably $1.49 \times 10^6$ N·mm$^2$ or more. The bending rigidity of the panel structure for an automobile 10 can be measured by the same method as the bending rigidity of the resin member 2.

<Manufacturing Method of Panel structure for an automobile>

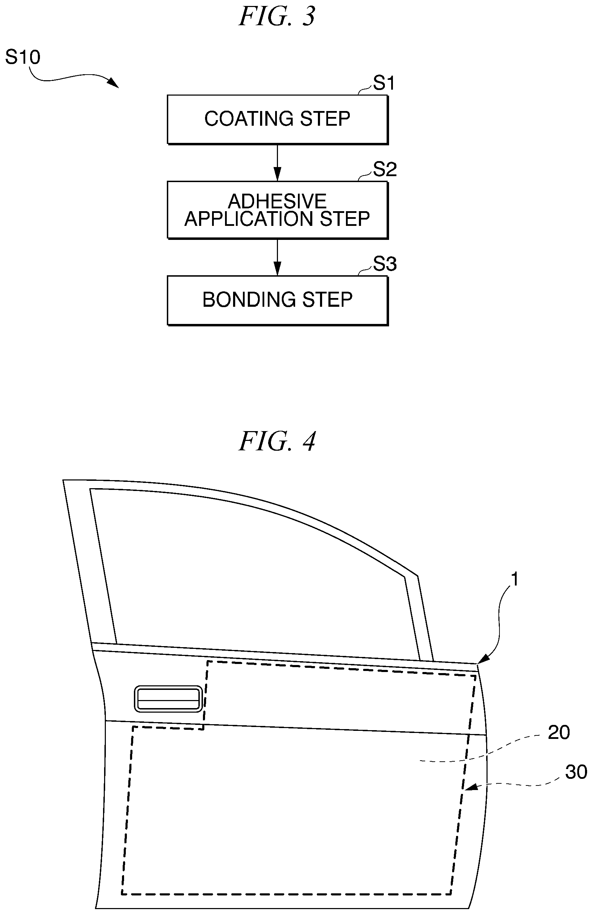

Next, an example of a manufacturing method of the panel structure for an automobile 10 according to the first embodiment will be described. FIG. 3 is a flowchart of a manufacturing method S10 of a panel structure for an automobile according to the first embodiment. As illustrated in FIG. 3, the manufacturing method S10 of a panel structure for an automobile according to the first embodiment includes a coating step S1 of coating the base metal of the outer panel member having a sheet shape, an adhesive application step S2 of applying the room-temperature curing adhesive to at least one of the inner surface of the outer panel member 1 and the resin member 2 after the coating step S1, and a bonding step S3 of bonding the inner surface of the outer panel member 1 and the resin member 2 after the adhesive application step S2. Hereinafter, each step will be described.

(Coating Step)

In the coating step S1, the base metal 12 press-formed into the shape of the outer panel member 1 is coated. As a result, the coating layer film 14 is formed on the base metal 12. The coating method is not particularly limited as long as it is a coating method used in automobile applications. Examples of the coating method include electrodeposition coating. In the case of performing electrodeposition coating, for example, degreasing, surface adjustment, chemical conversion treatment, electrodeposition coating, and baking are performed on the base metal 12 to form the coating film 14. Note that degreasing, surface adjustment, chemical conversion treatment, electrodeposition coating, and baking are preferably general methods used in automobile applications.

(Adhesive Application Step)

In the adhesive application step S2, after the coating step S1, the room-temperature curing adhesive is applied to at least one of the inner surface of the outer panel member 1 and the resin member 2. FIG. 4 is a view for describing an application position of a room-temperature curing adhesive. The room-temperature curing adhesive is preferably applied to the entire surface of the disposition region of at least one of the inner surface of the outer panel member 1 and the resin member 2. By applying the room-temperature curing adhesive to the entire surface of a disposition region 20 of at least one of the inner surface of the outer panel member 1 and the resin member 2, the panel stiffness of the panel structure for an automobile 10 can be improved. In the present embodiment, an application region 30 to which the room-temperature curing adhesive is applied is the same range as the disposition region 20. In the present embodiment, the room-temperature curing adhesive is applied to the entire surface of the disposition region 20 of the inner surface of the outer panel member 1, but it may be applied to the disposition region of the resin member 2. In addition, the room-temperature curing adhesive may be applied to the entire surface of the disposition region 20 of the inner surface of the outer panel member 1 and the disposition region of the resin member 2. Here, the disposition region 20 of the outer panel member 1 refers to a region within the region of the inner surface of the outer panel member 1 where the resin member 2 is to be disposed. The disposition region of the resin member 2 refers to a region of a surface to be joined to the outer panel member 1. In the present embodiment, since the disposition area of the resin member 2 is equal to the bonding area of the adhesive portion 3, the area of the adhesive portion 3 with respect to the disposition area of the resin member 2 is 100 area%.

In the adhesive application step S2, the disposition area of the resin member 2 disposed on the inner surface of the outer panel member 1 is preferably 50 area% or more with respect to the total area of the inner surface of the outer panel member 1. A disposition area of the resin member 2 disposed on the inner surface of the outer panel member 1 is 50 area% or more with respect to the total area of the inner surface of the outer panel member 1, and the rigidity of the panel structure for an automobile 10 is improved. Here, the disposition area of the resin member 2 refers to an area of a part where the resin member 2 is disposed within the area of the outer panel member 1. The disposition area of the resin member 2 is more preferably 70 area% or more with respect to the total area of the inner surface of the outer panel member 1. The upper limit of the disposition area of the resin member 2 is not particularly limited, but is 100 area%. The disposition area of the resin member 2 is preferably 90 area% or less.

(Bonding Step)

In the bonding step S3, after the adhesive application step S2, the inner surface of the outer panel member 1 and the resin member 2 are bonded. Specifically, the disposition region of the outer panel member 1 and the disposition region of the resin member 2 to which the room-temperature curing adhesive is applied are held together, and the room-temperature curing adhesive is cured at room temperature for a predetermined time, thereby obtaining the panel structure for an automobile 10.

The panel structure for an automobile 10 according to the first embodiment has been described in detail above. Although the outer panel member 1 of the first embodiment includes the coating film 14 on the outer surface and the inner surface, the coating film may be formed only on the outer surface of the outer panel member 1.

(Second Embodiment)

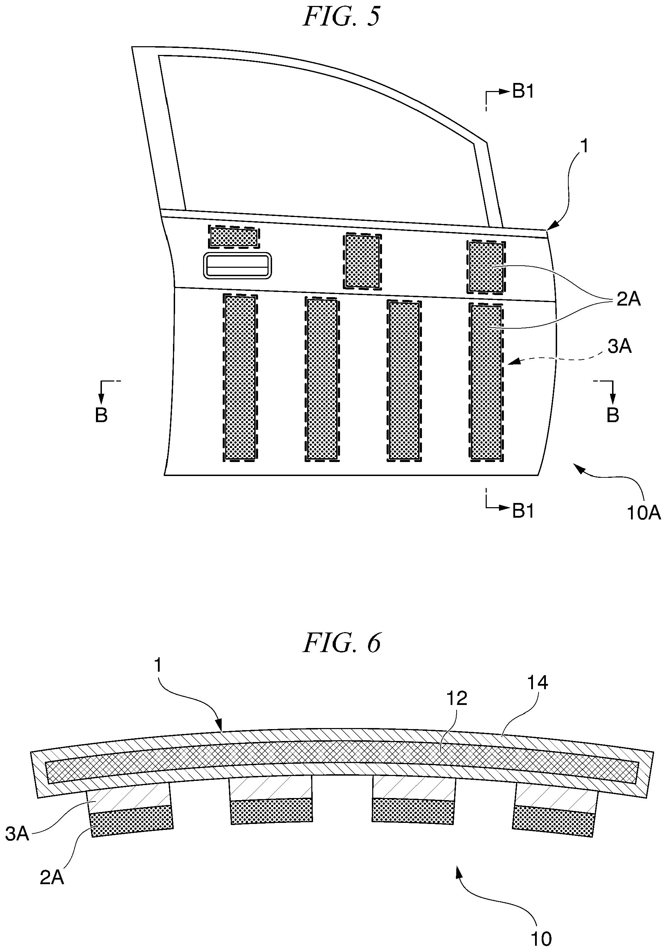

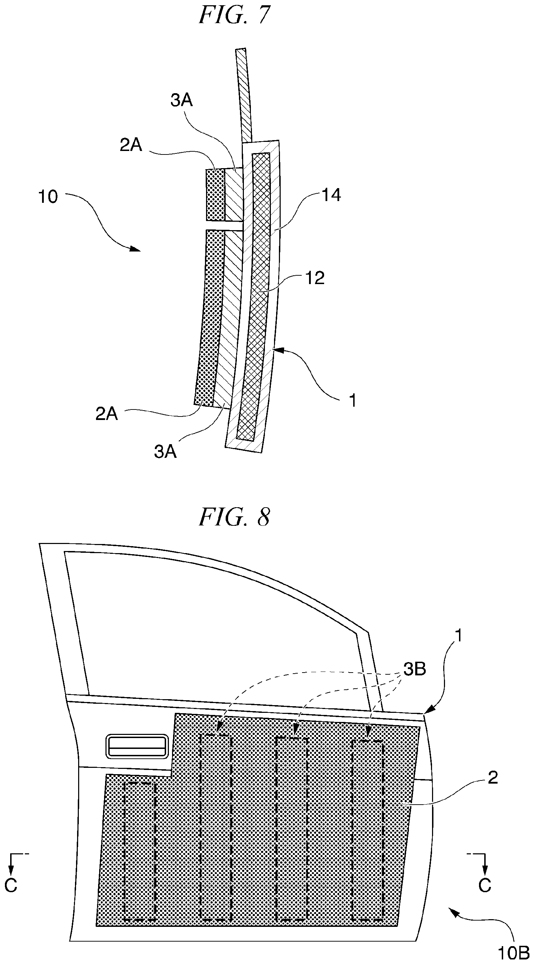

Next, a panel structure for an automobile 10A according to the second embodiment of the present invention will be described with reference to FIGS. 5 and 6. FIG. 5 is a plan view of the panel structure for an automobile 10A according to the second embodiment of the present invention. In addition, FIG. 6 is an end surface view along line B-B of the panel structure for an automobile in FIG. 5. FIG. 7 is an end surface view along line B1-B1 of the panel structure for an automobile in FIG. 5. As illustrated in FIGS. 5, 6, and 7, the panel structure for an automobile 10A according to the present embodiment includes an outer panel member 1 having a sheet shape, a resin member 2A disposed on an inner surface of the outer panel member 1, and an adhesive portion 3A that bonds the outer panel member 1 and the resin member 2A. Note that, in the second embodiment, the same components as those in the first embodiment are denoted by the same reference numbers, a description thereof is omitted, and only different points will be described.

(Resin Member 2A)

The bending rigidity of the resin member 2A of the present disclosure is $0.3 \times 10^6$ N·mm$^2$ or more. When the bending rigidity of the resin member 2A of the present disclosure is less than $0.3 \times 10^6$ N·mm$^2$, sufficient panel stiffness cannot be obtained. Even when the bending rigidity of the resin member 2A exceeds $2 \times 10^6$ N·mm$^2$, the effect is saturated, so that the bending rigidity of the resin member 2A is preferably $2 \times 10^6$ N·mm$^2$ or less.

In the resin member 2A, the thickness of a maximum thickness portion having the maximum size in a direction perpendicular to the in-plane direction of the outer panel member 1 is preferably 3 mm or more and 60 mm or less.

It is preferable that the thickness of the maximum thickness portion of the resin member 2A be 3 mm or more because the insufficiency of rigidity due to the thinning of the outer panel member 1 can be compensated.

On the other hand, even when the thickness of the maximum thickness portion of the resin member 2A exceeds 60 mm, the effect is saturated, and thus the thickness is preferably 60 mm or less.

As the material of the resin member 2A, the same resin as the resin member 2 can be used.

The resin member 2A may not be coated. Since the resin member 2A is bonded to the coated outer panel member 1, surface strain due to baking during electrodeposition coating after bonding does not occur, which is preferable. In addition, the resin member 2A may be coated at room temperature.

A disposition area of the resin member 2A disposed on the inner surface of the outer panel member 1 is preferably 50 area% or more with respect to the total area of the inner surface of the outer panel member 1. The disposition area of the resin member 2A disposed on the inner surface of the outer panel member 1 is 50 area% or more with respect to the total area of the inner surface of the outer panel member 1, and the rigidity of the panel structure for an automobile 10 is improved. Here, the disposition area of the resin member 2A refers to an area of a part where the resin member 2A is disposed within the area of the outer panel member 1. The disposition area of the resin member 2A is more preferably 70 area% or more with respect to the total area of the inner surface of the outer panel member 1. The disposition area of the resin member 2A is preferably 90 area% or less.

As illustrated in FIG. 7, the resin member 2A is preferably disposed along a direction in which the curvature of the outer panel member 1 increases. That is, by disposition along the direction in which the curvature increases as described above, the panel stiffness can be further increased.

In the second embodiment, a plurality of (in FIG. 5, seven) resin members 2A is disposed on the inner surface of the outer panel member 1. By disposing the plurality of resin members 2A, it is possible to reduce the weight of the panel structure for an automobile 10 while increasing the panel stiffness of necessary portions.

(Adhesive Portion)

The adhesive portion 3A of the present disclosure contains a cured material of a room-temperature curing adhesive. As the room-temperature curing adhesive, the same adhesive as the adhesive portion 3 can be used.

The area of the adhesive portion 3A with respect to the disposition area of the resin member 2A is preferably 5 area% or more. When the area of the adhesive portion 3A with respect to the disposition area of the resin member 2A is 5 area% or more, the panel stiffness of the panel structure for an automobile 10 can be improved. The area of the adhesive portion 3A with respect to the disposition area of the resin member 2A is more preferably 25 area% or more. In the present embodiment, since the disposition area of the resin member 2A is equal to the bonding area of the adhesive portion 3A, the area of the adhesive portion 3A with respect to the disposition area of the resin member 2A is 100 area%.

(Third Embodiment)

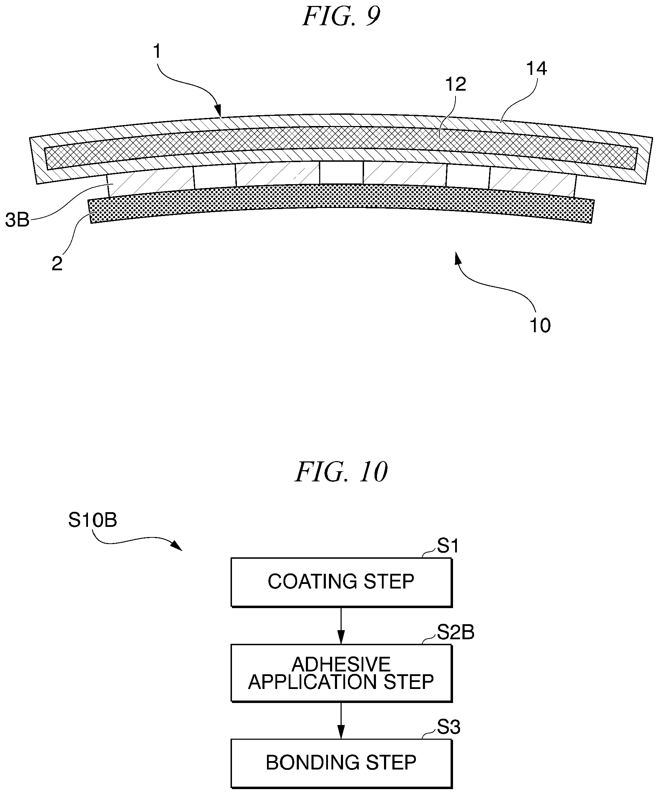

Next, a panel structure for an automobile 10B according to the third embodiment of the present invention will be described with reference to FIGS. 8 and 9. FIG. 8 is a plan view of the panel structure for an automobile 10B according to the third embodiment of the present invention. In addition, FIG. 9 is an end surface view along line C-C of the panel structure for an automobile in FIG. 8. As illustrated in FIGS. 8 and 9, the panel structure for an automobile 10B according to the present embodiment includes an outer panel member 1 having a sheet shape, a resin member 2 disposed on an inner surface of the outer panel member 1, and an adhesive portion 3B that bonds the outer panel member 1 and the resin member 2. Note that, in the third embodiment, the same components as those in the first embodiment are denoted by the same reference numbers, a description thereof is omitted, and only different points will be described.

(Adhesive Portion 3B)

The adhesive portion 3B of the present disclosure contains a cured material of a room-temperature curing adhesive. The cured material of the room-temperature curing adhesive used for the adhesive portion 3B is the same as that of the adhesive portion 3.
The adhesive portion 3B is linearly provided. The work efficiency can be improved by linearly providing the adhesive portion 3B.
The area of the adhesive portion 3B with respect to the disposition area of the resin member 2 is preferably 5 area% or more. When the area of the adhesive portion 3B with respect to the disposition area of the resin member 2 is 5 area% or more, the panel stiffness of the panel structure for an automobile 10 can be improved. The area of the adhesive portion 3B with respect to the disposition area of the resin member 2 is more preferably 25 area% or more.

<Manufacturing Method of Panel structure for an automobile>

Next, an example of a manufacturing method of the panel structure for an automobile 10B according to the third embodiment will be described. FIG. 10 is a flowchart of a manufacturing method S10B of a panel structure for an automobile according to the third embodiment. As illustrated in FIG. 10, the manufacturing method S10B of a panel structure for an automobile according to the third embodiment includes a coating step S1 of coating the base metal of the outer panel member having a sheet shape, an adhesive application step S2B of applying the room-temperature curing adhesive to at least one of the inner surface of the outer panel member 1 and the resin member 2 after the coating step S1, and a bonding step S3 of bonding the inner surface of the outer panel member 1 and the resin member 2 after the adhesive application step S2B. Hereinafter, each step will be described.

(Adhesive Application Step)

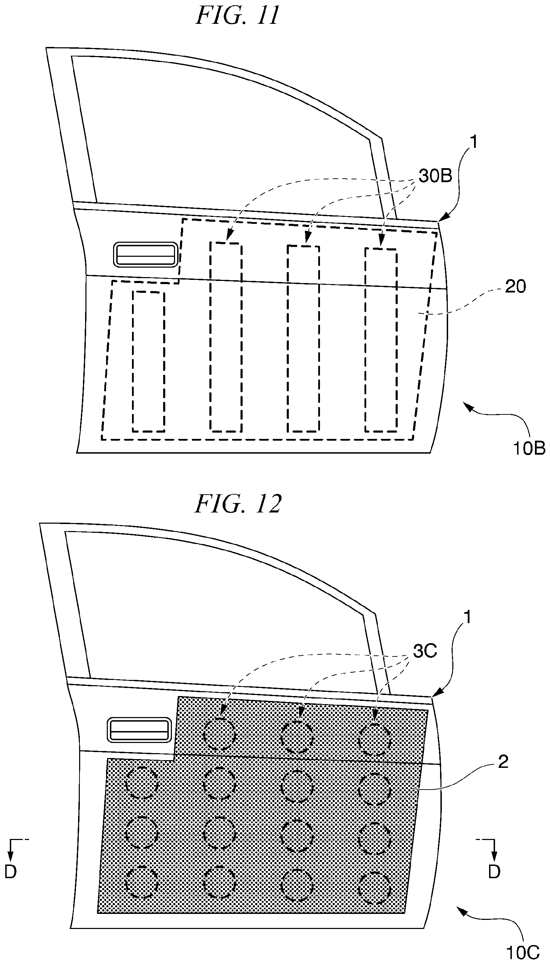

In the adhesive application step S2B, after the coating step S1, the room-temperature curing adhesive is applied to at least one of the inner surface of the outer panel member 1 and the resin member 2. FIG. 11 is a view for describing an application position of a room-temperature curing adhesive. The room-temperature curing adhesive is preferably linearly applied to the disposition region of at least one of the inner surface of the outer panel member 1 and the resin member 2. The application area of the room-temperature curing adhesive with respect to the disposition area of the resin member 2 may be 5 area% or more. By linearly applying the room-temperature curing adhesive to the disposition region 20 of at least one of the inner surface of the outer panel member 1 and the resin member 2, the panel stiffness of the panel structure for an automobile 10 can be improved while the workability is improved. In the third embodiment, application regions 30B to which the room-temperature curing adhesive is applied are evenly spaced apart within the disposition region 20. In the present embodiment, the room-temperature curing adhesive is linearly applied to the disposition region 20 of the inner surface of the outer panel member 1, but it may be linearly applied to the disposition region of the resin member 2. In addition, the room-temperature curing adhesive may be linearly applied to the disposition region 20 of the inner surface of the outer panel member 1 and the disposition region of the resin member 2. Note that the linear application means, for example, application with the width of a line of about 1 cm to 5 cm.

(Fourth Embodiment)

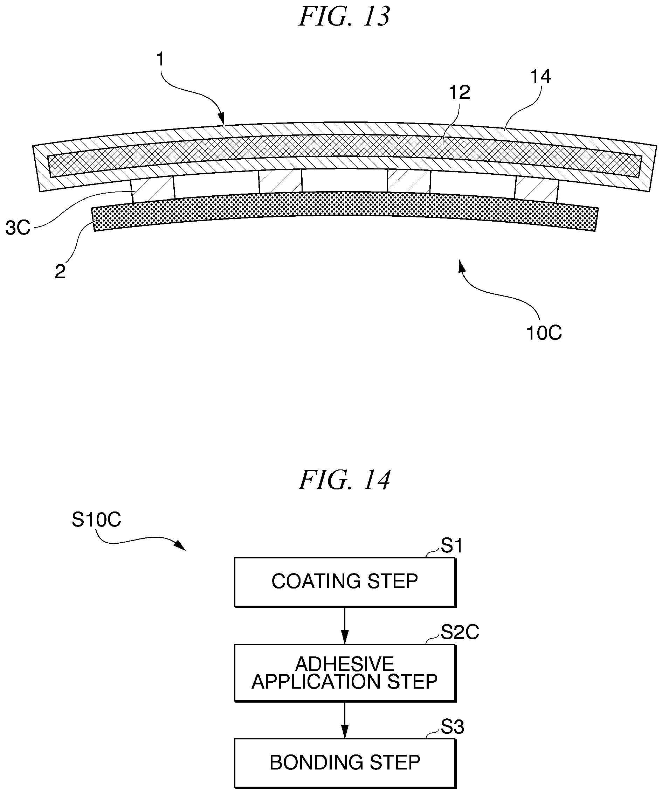

Next, a panel structure for an automobile 10C according to the fourth embodiment of the present invention will be described with reference to FIGS. 12 and 13. FIG. 12 is a plan view of the panel structure for an automobile 10C according to the fourth embodiment of the present invention. In addition, FIG. 13 is an end surface view along line D-D of the panel structure for an automobile in FIG. 12. As illustrated in FIGS. 12 and 13, the panel structure for an automobile 10C according to the present embodiment includes an outer panel member 1 having a sheet shape, a resin member 2 disposed on an inner surface of the outer panel member 1, and an adhesive portion 3C that bonds the outer panel member 1 and the resin member 2. Note that, in the fourth embodiment, the same components as those in the first embodiment are denoted by the same reference numbers, a description thereof is omitted, and only different points will be described.

(Adhesive Portion 3C)

The adhesive portion 3C of the present disclosure contains a cured material of a room-temperature curing adhesive. The cured material of the room-temperature curing adhesive used for the adhesive portion 3C is the same as that of the adhesive portion 3.

The adhesive portion 3C is provided in a dot shape. The work efficiency can be improved by providing the adhesive portion 3C in a dot shape.

The area of the adhesive portion 3C with respect to the disposition area of the resin member 2 is preferably 5 area% or more. When the area of the adhesive portion 3C with respect to the disposition area of the resin member 2 is 5 area% or more, the panel stiffness of the panel structure for an automobile 10 can be improved. The area of the adhesive portion 3C with respect to the disposition area of the resin member 2 is more preferably 25 area% or more.

<Manufacturing Method of Panel structure for an automobile>

Next, an example of a manufacturing method of the panel structure for an automobile 10C according to the fourth embodiment will be described. FIG. 14 is a flowchart of a manufacturing method S10C of the panel structure for an automobile according to the fourth embodiment. As illustrated in FIG. 14, the manufacturing method S10C of a panel structure for an automobile according to the fourth embodiment includes a coating step S 1 of coating the base metal of the outer panel member having a sheet shape, an adhesive application step S2C of applying the room-temperature curing adhesive to at least one of the inner surface of the outer panel member 1 and the resin member 2 after the coating step S1, and a bonding step S3 of bonding the inner surface of the outer panel member 1 and the resin member 2 after the adhesive application step S2C.

(Adhesive Application Step)

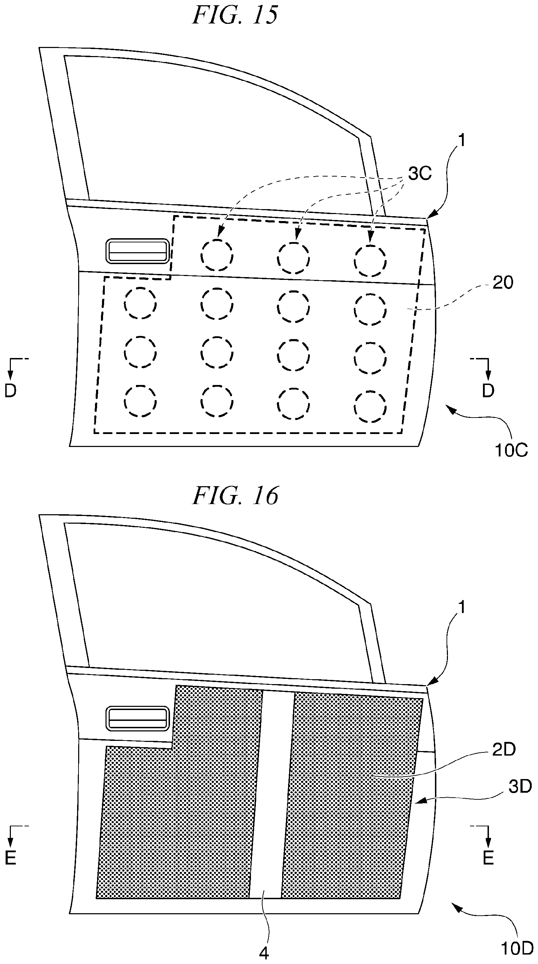

In the adhesive application step S2C, after the coating step S1, the room-temperature curing adhesive is applied to at least one of the inner surface of the outer panel member 1 and the resin member 2C. FIG. 15 is a view for describing an application position of a room-temperature curing adhesive. The room-temperature curing adhesive is preferably applied in a dot shape to the disposition region of at least one of the inner surface of the outer panel member 1 and the resin member 2. By applying the room-temperature curing adhesive in a dot shape to the disposition region 20 of at least one of the inner surface of the outer panel member 1 and the resin member 2, the panel stiffness of the panel structure for an automobile 10 can be improved while the workability is improved. In the fourth embodiment, a plurality of application regions 30C to which the room-temperature curing adhesive is applied is evenly spaced apart within the disposition region 20. In the present embodiment, the room-temperature curing adhesive is applied in a dot shape to the disposition region 20 of the inner surface of the outer panel member 1, but it may be applied in a dot shape to the disposition region of the resin member 2. In addition, the room-temperature curing adhesive may be applied in a dot shape to the disposition region 20 of the inner surface of the outer panel member 1 and the disposition region of the resin member 2. Note that the application in a dot shape means, for example, application in which the diameter of the dot is about 0.1 to 5 mm and the amount of the adhesive is about 0.001 to 3 mg.

(Fifth Embodiment)

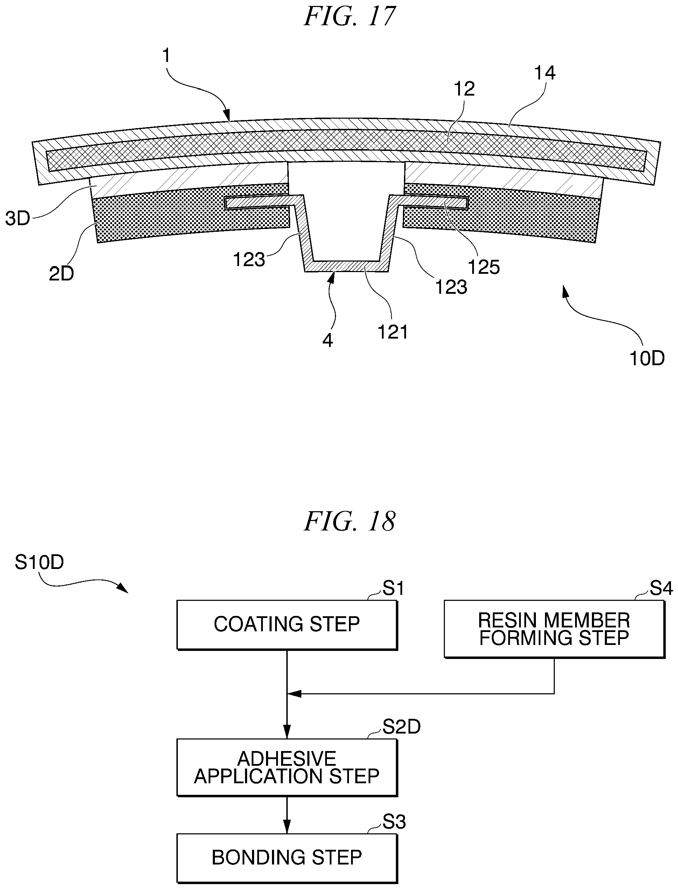

Next, a panel structure for an automobile 10D according to the fifth embodiment of the present invention will be described with reference to FIGS. 16 and 17. FIG. 16 is a plan view of the panel structure for an automobile 10D according to the fifth embodiment of the present invention. In addition, FIG. 17 is an end surface view along line E-E of the panel structure for an automobile in FIG. 16. As illustrated in FIGS. 16 and 17, the panel structure for an automobile 10D according to the present embodiment includes an outer panel member 1 having a sheet shape, a resin member 2D disposed on an inner surface of the outer panel member 1, an adhesive portion 3D that bonds the outer panel member 1 and the resin member 2D, and an inner member 4. Note that, in the fifth embodiment, the same components as those in the first embodiment are denoted by the same reference numbers, a description thereof is omitted, and only different points will be described.

(Resin Member 2D)

The bending rigidity of the resin member 2D of the present disclosure is $0.3 \times 10^6$ N·mm² or more. When the bending rigidity of the resin member 2D of the present disclosure is less than $0.3 \times 10^6$ N·mm², sufficient panel stiffness cannot be obtained. Even when the bending rigidity of the resin member 2D exceeds $2 \times 10^6$ N·mm², the effect is saturated, so that the bending rigidity of the resin member 2D is preferably $2 \times 10^6$ N·mm² or less.

In the resin member 2D, the thickness of a maximum thickness portion having the maximum size in a direction perpendicular to the in-plane direction of the outer panel member 1 is preferably 3 mm or more and 60 mm or less.

It is preferable that the thickness of the maximum thickness portion of the resin member 2D be 3 mm or more because the insufficiency of rigidity due to the thinning of the outer panel member 1 can be compensated.

On the other hand, even when the thickness of the maximum thickness portion of the resin member 2D exceeds 60 mm, the effect is saturated, and thus the thickness is preferably 60 mm or less.

As the material of the resin member 2D, the same resin as the resin member 2 can be used.

The resin member 2D may not be coated. Since the resin member 2D is bonded to the coated outer panel member 1, surface strain due to baking during electrodeposition coating after bonding does not occur, which is preferable. In addition, the resin member 2D may be coated at room temperature.

A disposition area of the resin member 2D disposed on the inner surface of the outer panel member 1 is preferably 50 area% or more with respect to the total area of the inner surface of the outer panel member 1. The disposition area of the resin member 2D disposed on the inner surface of the outer panel member 1 is 50 area% or more with respect to the total area of the inner surface of the outer panel member 1, and the rigidity of the panel structure for an automobile 10 is improved. Here, the disposition area of the resin member 2D refers to an area of a part where the resin member 2D is disposed within the area of the outer panel member 1. The disposition area of the resin member 2D is more preferably 70 area% or more with respect to the total area of the inner surface of the outer panel member 1. The disposition area of the resin member 2D is preferably 90 area% or less.

In the fifth embodiment, the two resin members 2D are provided so as to sandwich the inner member 4. By disposition to sandwich the inner member 4, the panel stiffness can be further improved.

(Adhesive Portion)

The adhesive portion 3D of the present disclosure contains a cured material of a room-temperature curing adhesive. As the room-temperature curing adhesive, the same adhesive as the adhesive portion 3 can be used.

The area of the adhesive portion 3D with respect to the disposition area of the resin member 2D is preferably 5 area% or more. When the area of the adhesive portion 3D with respect to the disposition area of the resin member 2D is 5 area% or more, the panel stiffness of the panel structure for an automobile 10D can be improved. The area of the adhesive portion 3D with respect to the disposition area of the resin member 2D is more preferably 25 area% or more. In the present embodiment, since the disposition area of the resin member 2D is equal to the bonding area of the adhesive portion 3D, the area of the adhesive portion 3D with respect to the disposition area of the resin member 2D is 100 area%.

(Inner Member)

The inner member 4 is an elongated member disposed to face the inner surface of the outer panel member 1. The inner member 4 is disposed in the form of extending along one direction in the in-plane direction of the outer panel member 1. The inner member 4 is attached to the outer panel member 1 in such a form that the longitudinal direction thereof matches the vehicle width direction so as to have a role of reinforcing the panel structure for an automobile 10.

As illustrated in FIG. 17, the inner member 4 has a substantially hat-shaped cross-sectional portion including a top sheet portion 121, a pair of side wall portions 123, 123 bent and extending from both end portions of the top sheet portion 121, and a pair of flange portions 125, 125 bent and extending outward from end portions of the pair of side wall portions 123, 123 on a side opposite to the top sheet portion 121.

Note that, in the present disclosure, the width direction of the inner member 4 means a direction parallel to the top sheet portion 121 among directions perpendicular to the longitudinal direction of the inner member 4.

The inner member 4 can be obtained, for example, by press forming a metal sheet such as a steel sheet.

At the center in the longitudinal direction of the inner member 4, the end portions in the width direction of the pair of flange portions 125, 125 of the inner member 4 enter the inside of a pair of resin members 2D, 2D from the side surfaces of the pair of resin members 2D, 2D. That is, at least a part of the inner member 4 is embedded in the resin member 2D. In the present disclosure, "at least a part of the inner member 4 is embedded in the resin member" means that at least a part of the inner member 4 enters the resin member and is retained in a state of surface contact. Further, the upper surfaces of the pair of resin members 2D, 2D are joined to the inner surface of the outer panel member 1 via the adhesive portion 3D.

<Manufacturing Method of Panel structure for an automobile>

Next, an example of a manufacturing method of the panel structure for an automobile 10D according to the fifth embodiment will be described. FIG. 18 is a flowchart of a manufacturing method S10D of a panel structure for an automobile according to the fifth embodiment. As illustrated in FIG. 18, the manufacturing method S10D of a panel structure for an automobile according to the fifth embodiment includes a coating step S1 of coating the base metal 12 of the outer panel member 1 having a sheet shape, a resin member molding step S4 of integrally molding the inner member 4 and the resin member 2D, an adhesive application step S2D of applying the room-temperature curing adhesive to at least one of the inner surface of the outer panel member 1 and the resin member 2D after the coating step S1 and the resin member molding step S4, and a bonding step S3 of bonding the inner surface of the outer panel member 1 and the resin member 2D after the adhesive application step S2D. Hereinafter, each step will be described.

(Resin Member Molding Step)

In the resin member molding step S4, a mold is installed so as to surround a predetermined portion of the inner member 4, and resin material is injected into the mold and solidified to integrate the inner member 4 and the pair of resin members 2D, 2D. As the resin material, either thermoplastic resin or thermosetting resin can be employed. In addition, the resin material may contain a foaming agent. Examples of the foaming agent include N,N'-dinitrosopentamethylenetetramine, azodicarbonamide, 4,4'-oxybis(benzenesulfonylhydrazide), hydrogen carbonate, and sodium hydrogen carbonate.

In the resin member molding step S4, intermediate products of the pair of resin members 2D, 2D may be molded by first injecting and solidifying a resin material into the mold, slit processing may be performed on each intermediate product, and the flange portions 125 of the inner member 4 may be inserted into the slits to integrate them.

(Adhesive Application Step)

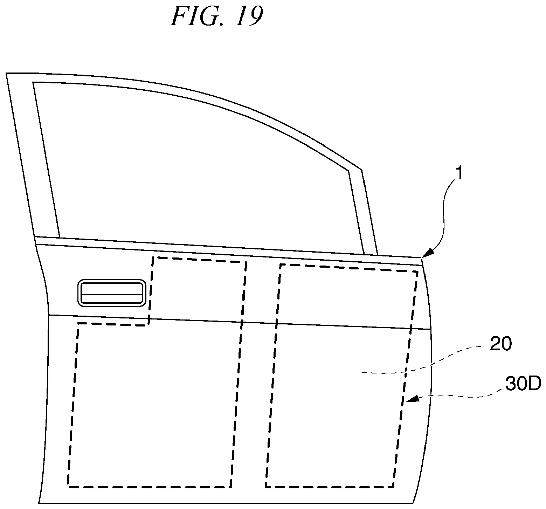

In the adhesive application step S2D, after the coating step S1 and the resin member molding step S4, the room-temperature curing adhesive is applied to at least one of the inner surface of the outer panel member 1 and the resin member 2D. FIG. 19 is a view for describing an application position of a room-temperature curing adhesive. The room-temperature curing adhesive is preferably applied to the entire surface of the disposition region of at least one of the inner surface of the outer panel member 1 and the resin member 2D. By applying the room-temperature curing adhesive to the entire surface of a disposition region 20 of at least one of the inner surface of the outer panel member 1 and the resin member 2D, the panel stiffness of the panel structure for an automobile 10 can be improved. An application region 30D to which the room-temperature curing adhesive is applied is the same range as the disposition region 20. In the present embodiment, the room-temperature curing adhesive is applied to the entire surface of the disposition region 20 of the inner surface of the outer panel member 1, but it may be applied to the disposition region of the resin member 2D. In addition, the room-temperature curing adhesive may be applied to the entire surface of the disposition region 20 of the inner surface of the outer panel member 1 and the disposition region of the resin member 2D.

In the adhesive application step S2D, the disposition area of the resin member 2D disposed on the inner surface of the outer panel member 1 is preferably 50 area% or more with respect to the total area of the inner surface of the outer panel member 1. When the disposition area of the resin member 2D disposed on the inner surface of the outer panel member 1 is 50 area% or more with respect to the total area of the inner surface of the outer panel member 1, the rigidity of the panel structure for an automobile 10 is improved.

The panel structure for an automobile 10D of the fifth embodiment has been described in detail above. Note that, in the fifth embodiment, a member having a hat-shaped cross-section is used as the inner member 4, but a member having a U-shaped cross-section or a member having a T-shaped cross-section may be used. In addition, although the resin member 2D is provided over the total length in the longitudinal direction of the inner member 4, the resin member 2D may be constituted to be provided only in a part in the longitudinal direction of the inner member 4.

Although the panel structure for an automobile 10 of the present disclosure has been described above on the basis of the first embodiment, the second embodiment, the third embodiment, the fourth embodiment, and the fifth embodiment, the panel structure for an automobile 10 of the present disclosure is not limited thereto.

For example, the panel structure for an automobile 10 of a side door can also be applied to panel structures such as a hood, a roof, and a back door.

[Brief Description of the Reference Symbols]

1 Outer panel member
2 Resin member
3 Adhesive portion
4 Inner member
10 Panel structure for an automobile

**Claims**

1. A panel structure for an automobile, comprising:

   an outer panel member having a sheet shape;
   a resin member that is disposed on an inner surface of the outer panel member; and
   an adhesive portion that bonds the outer panel member and the resin member, wherein
   the outer panel member includes a base metal and a coating film provided on the base metal,
   the base metal has a sheet thickness of 0.3 mm to 0.5 mm,
   the resin member has a bending rigidity of $0.3 \times 10^6$ N·mm$^2$ or more, and
   the adhesive portion contains a cured material of a room-temperature curing adhesive.

2. The panel structure for an automobile according to claim 1, wherein a disposition area of the resin member disposed on the inner surface of the outer panel member is 50 area% or more with respect to a total area of the inner surface of the outer panel member.

3. The panel structure for an automobile according to claim 2, wherein an area of the adhesive portion with respect to the disposition area of the resin member is 5 area% or more.

4. The panel structure for an automobile according to claim 1 or 2, further comprising:

   an inner member that is disposed to face the inner surface of the outer panel member, wherein
   at least a part of the inner member is embedded in the resin member.

5. The panel structure for an automobile according to claim 4, wherein the inner member extends along one direction in an in-plane direction of the outer panel member.

6. The panel structure for an automobile according to claim 1 or 2, wherein the resin member is a thermosetting resin.

7. The panel structure for an automobile according to claim 1 or 2, wherein the resin member is a thermoplastic resin.

8. The panel structure for an automobile according to claim 1 or 2, wherein the room-temperature curing adhesive is an acrylic adhesive.

9. The panel structure for an automobile according to claim 1 or 2, wherein the outer panel member has a tensile strength of 440 MPa or more.

10. The panel structure for an automobile according to claim 1 or 2, wherein in the resin member, a thickness of a portion having a maximum size in a direction perpendicular to an in-plane direction of the outer panel member is 3 mm or more and 60 mm or less.

11. The panel structure for an automobile according to claim 1 or 2, wherein the resin member is not coated.

12. A manufacturing method of a panel structure for an automobile, comprising:

   a coating step of coating a base metal of an outer panel member having a sheet shape;
   an adhesive application step of applying a room-temperature curing adhesive to at least one of an inner surface of the outer panel member and a resin member after the coating step; and
a bonding step of bonding the inner surface of the outer panel member and the resin member after the adhesive application step.

13. The manufacturing method of a panel structure for an automobile according to claim 12, wherein a disposition area of the resin member disposed on the inner surface of the outer panel member is 50 area% or more with respect to a total area of the inner surface of the outer panel member.

14. The manufacturing method of a panel structure for an automobile according to claim 13, wherein an application area of the room-temperature curing adhesive with respect to the disposition area of the resin member is 5 area% or more.

15. The manufacturing method of a panel structure for an automobile according to claim 12 or 13, wherein

in the adhesive application step,
the room-temperature curing adhesive is applied to an entire surface of a disposition region of at least one of the inner surface of the outer panel member and the resin member.

16. The manufacturing method of a panel structure for an automobile according to claim 12 or 13, wherein

in the adhesive application step,
the room-temperature curing adhesive is linearly applied to a disposition region of at least one of the inner surface of the outer panel member and the resin member.

17. The manufacturing method of a panel structure for an automobile according to claim 12 or 13, wherein

in the adhesive application step,
the room-temperature curing adhesive is applied in a dot shape to a disposition region of at least one of the inner surface of the outer panel member and the resin member.

*FIG. 1*

*FIG. 2*

## FIG. 3

```
S10
        ┌─────────────────────────┐ S1
        │      COATING STEP       │
        └─────────────────────────┘
                    │
                    ▼
        ┌─────────────────────────┐ S2
        │        ADHESIVE         │
        │   APPLICATION STEP      │
        └─────────────────────────┘
                    │
                    ▼
        ┌─────────────────────────┐ S3
        │      BONDING STEP       │
        └─────────────────────────┘
```

## FIG. 4

## FIG. 5

## FIG. 6

*FIG. 7*

*FIG. 8*

## FIG. 9

## FIG. 10

*FIG. 11*

*FIG. 12*

*FIG. 13*

1

12

14

3C

2

10C

*FIG. 14*

S10C

| COATING STEP | S1 |
|---|---|

↓

| ADHESIVE APPLICATION STEP | S2C |
|---|---|

↓

| BONDING STEP | S3 |
|---|---|

*FIG. 15*

*FIG. 16*

## FIG. 17

## FIG. 18

*FIG. 19*

## INTERNATIONAL SEARCH REPORT

| International application No. |
|---|
| **PCT/JP2022/032381** |

**A.    CLASSIFICATION OF SUBJECT MATTER**

***B62D 29/04***(2006.01)i; ***B32B 27/00***(2006.01)i
FI:    B62D29/04 A; B32B27/00 B

According to International Patent Classification (IPC) or to both national classification and IPC

**B.    FIELDS SEARCHED**

Minimum documentation searched (classification system followed by classification symbols)

B62D17/00-25/08; B62D25/14-29/04; B32B1/00-43/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | WO 2020/145198 A1 (NIPPON STEEL CORPORATION) 16 July 2020 (2020-07-16) paragraphs [0024]-[0082], [0115], [0117], [0139]-[0142], fig. 1-8 | 1-3, 9-10 |
| Y | | 1-9, 11-17 |
| Y | WO 2021/064870 A1 (NIPPON STEEL CORPORATION) 08 April 2021 (2021-04-08) paragraphs [0002], [0014]-[0066], fig. 1-9 | 1-9, 11-17 |
| Y | JP 2009-73406 A (TOYOTA MOTOR CORP) 09 April 2009 (2009-04-09) paragraphs [0026]-[0048], fig. 1, 4 | 4-5 |
| Y | JP 2001-271446 A (DENKI KAGAKU KOGYO KK) 05 October 2001 (2001-10-05) claims 4-5, paragraphs [0002]-[0005], [0015]-[0022] | 8 |

☐ Further documents are listed in the continuation of Box C.          ☑ See patent family annex.

\*    Special categories of cited documents:
"A"    document defining the general state of the art which is not considered to be of particular relevance
"E"    earlier application or patent but published on or after the international filing date
"L"    document which may throw doubts on priority claim(s) or which is cited to establish the publication date of another citation or other special reason (as specified)
"O"    document referring to an oral disclosure, use, exhibition or other means
"P"    document published prior to the international filing date but later than the priority date claimed

"T"    later document published after the international filing date or priority date and not in conflict with the application but cited to understand the principle or theory underlying the invention
"X"    document of particular relevance; the claimed invention cannot be considered novel or cannot be considered to involve an inventive step when the document is taken alone
"Y"    document of particular relevance; the claimed invention cannot be considered to involve an inventive step when the document is combined with one or more other such documents, such combination being obvious to a person skilled in the art
"&"    document member of the same patent family

| Date of the actual completion of the international search | Date of mailing of the international search report |
|---|---|
| **21 October 2022** | **01 November 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

<div align="center">

**INTERNATIONAL SEARCH REPORT**
**Information on patent family members**

</div>

| International application No. |
| :--- |
| **PCT/JP2022/032381** |

| Patent document cited in search report | Publication date (day/month/year) | Patent family member(s) | Publication date (day/month/year) |
| :--- | :--- | :--- | :--- |
| WO 2020/145198 A1 | 16 July 2020 | US 2022/0126926 A1 paragraphs [0074]-[0132], [0165], [0167], [0188]-[0191], fig. 1-8 EP 3909833 A1 CN 113302115 A | |
| WO 2021/064870 A1 | 08 April 2021 | JP 6760549 B1 CN 114340890 A | |
| JP 2009-73406 A | 09 April 2009 | (Family: none) | |
| JP 2001-271446 A | 05 October 2001 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021143779 A

- JP S63258274 A